# EUROPÄISCHE PATENTSCHRIFT

(11) **EP 1 272 302 B1**
(45) Veröffentlichungstag und Bekanntmachung des Hinweises auf die Patenterteilung: **20.10.2004**
(21) Anmeldenummer: 01943209.5
(22) Anmeldetag: 30.03.2001
(51) Int. Cl.: B22F 1/00

(54) **VERFAHREN ZUR HERSTELLUNG EINES BAUTEILS AUS PULVERFÖRMIGEM AUSGANGSMATERIAL UND DAFÜR GEEIGNETER EXTRAKTOR**
METHOD FOR PRODUCING A COMPONENT BY MEANS OF A POWDERY STARTING MATERIAL AND EXTRACTOR SUITABLE THEREFORE
PROCEDE DE PRODUCTION D'UN COMPOSANT A PARTIR D'UNE MATIERE PREMIERE EN POUDRE ET EXTRACTEUR APPROPRIE POUR CE PROCEDE

(30) Priorität: 04.04.2000 DE 10016695
(43) Veröffentlichungstag der Anmeldung: 08.01.2003
(73) Patentinhaber: MESSER GRIESHEIM GmbH, 65933 Frankfurt am Main (DE); Uhde Hochdrucktechnik GmbH, 58093 Hagen (DE)
(72) Erfinder: BERGER, Thomas, 45219 Essen (DE); DIERKES, Heribert, 58093 Hagen (DE); COHRT, Henri, 35444 Biebertal (DE)
(86) Internationale Anmeldenummer: PCT/EP2001/003663
(87) Internationale Veröffentlichungsnummer: WO 2001/074518

(56) Entgegenhaltungen:
- US-A- 4 731 208
- US-A- 4 943 403
- R.M. GERMAN: "Powder Injection Molding" 1990 , METAL POWDER INDUSTRIES FEDERATION , PRINCETON (USA) XP002176250 Seite 325-327 Seite 332 -Seite 345
- SHIMIZU, TORU; SANO, TOSHIO; MOCHIZUKI, SATOSHI; FUCHIZAWA, MASAKATU: "A debinding method using supercritical CO2" ADV. POWDER METALL. PART. MAT., Bd. 5, Nr. 19, 1996 - 1996, Seiten 207-212, XP001012877
- PATENT ABSTRACTS OF JAPAN vol. 015, no. 475 (M-1186), 3. Dezember 1991 (1991-12-03) -& JP 03 204587 A (SHIMADZU CORP), 6. September 1991 (1991-09-06)

## Beschreibung

Die Erfindung betrifft ein Verfahren zur Herstellung eines Bauteils aus pulverförmigem Ausgangsmaterial, durch Vermischen des Ausgangs-Pulvers mit Hilfsstoffen, umfassend Bindemittel, unter Bildung einer fließfähigen Masse, Erzeugen eines Grünkörpers aus der Masse durch Pulverspritzgießen, Extraktion eines Teils der Hilfsstoffe, indem der Grünkörper in einem Behälter erwärmt und einem Lösungsmittel-Strom ausgesetzt wird, und Sintern des Grünkörpers unter Bildung des Bauteils.

Das Pulverspritzgießen wird vorwiegend zur Herstellung geometrisch komplexer Bauteile in hohen Stückzahlen eingesetzt. Vorallem mechanisch schwierig zu bearbeitende Werkstoffe, wie z.B. Hartmetalle, Keramiken und Graphit, sind mit diesem Verfahren leicht zu verarbeiten.

Der Verfahrensablauf beim Pulverspritzgießen ist in der Produktinformationsschrift "Pulvermetallurgisches Spritzgießen - ein fortschrittliches Fertigungsverfahren" der Schunk Sintermetalltechnik GmbH (Druckvermerk: 52.02/1996) beschrieben. Danach lässt sich das Pulverspritzgießen in mehrere Schritte gliedern. Pulverförmiges Ausgangsmaterial - in der Regel handelt es sich dabei um metallisches oder keramisches Pulver oder um Graphit - wird in einem ersten Verfahrensschritt mit thermoplastischen Binde- und Plastifizierungsmitteln zu einer fließfähigen Masse vermischt. Diese Masse lässt sich auf Spritzgießmaschinen zu einer endkonturnahen Grünkörper verarbeiten. Zur Entfernung der Binde- und Plastifizierungsmittel aus dem Grünkörper wird dieser in einem weiteren Verfahrensschritt einer sogenannten Extraktion oder einer Pyrolyse unterzogen. Bei der Extraktion werden die genannten Hilfsstoffe chemisch in einem Lösungsmittel gelöst und aus dem Grünkörper ausgetragen, während sie bei der Pyrolyse thermisch zersetzt werden. Der dabei entstehende Bräunling wird im nächsten Verfahrensschritt zu einem Metall-, Keramik- oder Graphitkörper gesintert.

Die Binde- und Plastifizierungsmittel erleichtern nicht nur die Verarbeitung der Masse, sondern sie verleihen dem Grünkörper auch die für seine Weiterverarbeitung erforderliche Formstabilität. Damit der Grünkörper seine Form beibehält, muss der Entzug dieser Hilfsstoffe allmählich und schonend erfolgen. Dies gilt vorallem bei der Extraktion der Binde- und Plastifizierungsmittel von durch Pulverspritzgießen erzeugten Grünkörpern. Denn die Grünkörper werden bei diesem Verfahren in der Regel vor der Extraktion der Hilfsstoffe entformt und werden daher ungestützt - frei stehend oder zum Beispiel in einem Sandbett liegend - dem Lösungsmittel-Strom ausgesetzt. Daher werden solche Bindemittelsysteme eingesetzt, die bei Raumtemperatur fest sind und die den Grünkörpem die erforderliche Formstabilität bei dieser Temperatur verleihen können. Der Entzug der Binde- und Plastifizierungsmittel durch Pyrolyse dauert - je nach Wandstärke des Grünkörpers - mehrere Tage; und auch bei der Extraktion durch Lösungsmittel sind lange Behandlungszeiten erforderlich. Darüberhinaus sind Lösungsmittel und die Abbauprodukte gebräuchlicher Bindersysteme teilweise umweltbelastend.

Für die Durchführung einer Extraktion werden eine Vielzahl der zu entbindemden Grünkörper in einen Extraktionsbehälter in Form eines Bades eingebracht und mit dem Extraktionsmittel behandelt.

In "R.M. German, 'Powder Injection Molding' 1990, Metal Powder Industries Federation, Princeton (USA) XP002176250, Seiten 325-327 und 332-345" wird ein Verfahren zur Behandlung von durch Pulverspritzgießen hergestellten Grünkörpem beschrieben, wobei eine Extraktion des Binders mittels eines überkritischen Behandlungsgases wie Propan und Kohlendioxid unter Aufheizen erfolgt.

Der Erfindung liegt daher die Aufgabe zugrunde, ein Verfahren zur Extraktion von Bindemitteln anzugeben, das eine rasche und gleichzeitig schonende Entbinderung von Grünkörpern, die durch Pulverspritzgießen erzeugt sind, ermöglicht.

Diese Aufgabe löst ein Verfahren mit den in Anspruch 1 beschriebenen Merkmalen.

Für die Extraktion der Hilfsstoffe aus dem Grünkörper wird ein Lösungsmittel in Form eines überkritischen Behandlungsgases eingesetzt. Das Behandlungsgas umströmt den Grünkörper, löst dabei Hilfsstoffe - wie Bindemittel und Plastifizierungsmittel - , die anschließend mit dem Behandlungsgas aus dem Behälter ausgetragen werden. Dabei wird der Grünkörper durch das Entfernen der Hilfsstoffe zunehmend porös, so dass das Behandlungsgas auch die porösen Bereiche des Grünkörpers durchströmen kann. Bei dem Behälter handelt es sich hier um einen sogenannten Extraktor, in dem ein Überdruck erzeugt werden kann.

Das als Lösungsmittel eingesetzte überkritische Behandlungsgas zeichnet sich durch eine hohe Dichte aus, was wiederum die Lösungsmittelwirkung für die aus dem Grünkörper zu lösenden Hilfsstoffe verbessert. Die hohe Dichte wird dadurch erreicht, dass das überkritische Behandlungsgas in einem Temperatur-Druck-Regime oberhalb seiner spezifischen kritischen Temperatur- und Druckwerte gehalten wird.

Die Extraktion umfasst eine Aufheizphase, während der die Temperatur des Grünkörpers, und damit einhergehend auch die Temperatur des ihn umströmenden Behandlungsgases, erhöht wird. Die Temperaturerhöhung erfolgt kontinuierlich oder in Schritten. Die besondere Wirkung dieser Verfahrensweise wird im folgenden näher erläutert:

Die im Grünkörper enthaltenden Hilfsstoffe liegen im allgemeinen in unterschiedlichen Fraktionen vor, die sich zum Beispiel in ihren thermischen Eigenschaften - wie ihrer Schmelztemperatur - oder in ihren chemischen und physikalischen Eigenschaften - wie ihrer Löslichkeit im Behandlungsgas - unterscheiden können. Eine aus dem Grünkörper durch Lösung in einem Behandlungsgas entfernte oder eine durch Erhitzen verflüssigte Hilfsstoff-Fraktion trägt zur Formstabilität des Grünkörpers nicht mehr bei. Durch ein langsames Erhöhen der Temperatur des Grünkörpers während der Extraktion wird erreicht, dass die Hilfsstoff-Fraktionen entsprechend ihrer Löslichkeit im Behandlungsgas und ihrer Schmelztemperatur nacheinander aus dem Grünkörper entfernt werden. Zunächst werden die bei geringerer Temperatur löslichen Hilfsstoff-Fraktionen extrahiert, und mit zunehmender Temperatur die schwerer Löslichen. Dabei werden die Hilfsstoff-Fraktionen idealerweise durch Lösung im Behandlungsgas entfernt, bevor deren jeweilige Schmelztemperatur erreicht ist.

Die Löslichkeit der Hilfsstoffe im überkritischen Behandlungsgas nimmt mit der Temperatur zu. Im Fall einer Extraktion bei niedriger Temperatur würde die Beseitigung der Hilfsstoffe daher lange Zeiten erfordern, andererseits ginge im Fall einer Extraktion bei hoher Temperatur durch rasche Beseitigung oder Erweichung der Hilfsstoffe die Formstabilität des Grünkörpers verloren. Erst die allmähliche (stetige oder schrittweise) Temperaturerhöhung ermöglicht eine schonende und gleichzeitig rasche Beseitigung der Hilfsstoffe aus dem Grünkörper.

Wesentliche Voraussetzung dafür ist der Einsatz von bei Raumtemperatur festen Bindemittelsystemen, die eine derartige allmähliche Temperaturerhöhung erlauben, ohne dass der Grünkörper seine Formstabilität verliert. Das erfindungsgemäße Verfahren ist daher insbesondere für die Extraktion von Binde- und Plastifizierungsmittel aus solchen Grünkörpern vorteilhaft einsetzbar, die durch Pulverspritzgießen erzeugt worden sind und die in der Regel während der Extraktion entformt und ungestützt vorliegen, eine ausreichende Formstabilität somit aus sich selbst heraus gewährleisten müssen.

Die Temperaturführung während der Extraktion hängt im wesentlichen von den thermischen und chemischen Eigenschaften der eingesetzten Hilfsstoffe sowie von den geometrischen Abmessungen des Grünkörpers ab. Als günstig hat es sich erwiesen, in der Aufheizphase eine Aufheizrate im Bereich von 0,1°C/min und 5 °C/min, vorzugsweise im Bereich von 0,5°C/min und 2 °C/min, einzustellen. Mit einer Aufheizrate in diesem Bereich wird im allgemeinen eine rasche und schonende Extraktion der Hilfsstoffe erreicht.

Dies gilt gleichermaßen für eine Verfahrensweise, bei der in der Aufheizphase die Temperatur des Grünkörpers im Bereich zwischen 20 °C und 150 °C, vorzugsweise zwischen 30 °C und 130 °C erhöht wird. An die Aufheizphase kann sich eine Haltephase anschließen, während der der Grünkörper bei erhöhter Temperatur gehalten wird. Aus Gründen der Erhaltung einer ausreichenden mechanischen Stabilität wird die Extraktion im allgemeinen so geführt, dass ein für das anschließende Sintern unschädlicher Rest an Hilfsstoffen im Grünkörper verbleibt.

Die Wirkung des Behandlungsgases hinsichtlich der Entfernung der Hilfsstoffe wird verbessert, wenn dem Behandlungsgas eine erste Strömungsrichtung vorgegeben wird, wobei der Grünkörper während der Aufheizphase von dem Behandlungsgas in erster Strömungsrichtung umströmt wird, und die Strömungsrichtung im Verlauf der Aufheizphase mindestens einmal geändert wird. Dies lässt sich durch die hohe Dichte des überkritischen Behandlungsgases, die im Bereich der spezifischen Dichte der zu extrahierenden Hilfsstoffe liegt, erklären. Bedingt durch die Temperaturerhöhung verändert sich im Verlauf der Aufheizphase das Dichteverhältnis von Behandlungsgas und der zu extrahierenden Hilfsstoffe. Zu Beginn der Aufheizphase, also bei niedrigen Temperaturen, ist die Dichte des Behandlungsgases höher als die der Hilfsstoffe. Vorzugsweise wird der Grünkörper dabei von unten nach oben umströmt, so dass das Behandlungsgas die Hilfsstoffe leicht nach oben verdrängen und aus dem Extraktor austragen kann.

Es wird somit eine Verfahrensweise bevorzugt, bei der der Grünkörper in einem ersten zeitlichen Abschnitt der Aufheizphase von unten nach oben, und in einem zweiten zeitlichen Abschnitt der Aufheizphase von oben nach unten vom Behandlungsgas umströmt wird. Denn nach einer Umkehrung der Dichteverhältnisse bei höherer Temperatur werden die Hilfsstoffe von dem nunmehr von oben nach unten strömenden Behandlungsgas wirksamer aus dem Grünkörper und aus dem Extraktor entfernt. Die Temperatur, ab der eine Umkehrung des Dichteverhältnisses eintritt, hängt vom Innendruck im Extraktor ab.

Die Dauer der Extraktion insgesamt richtet sich im wesentlichen nach der Wandstärke des Grünkörpers. Als günstig hat es sich erwiesen, die Behandlungsdauer des Grünkörpers im Bereich von einer Stunde bis drei Stunden einzustellen.

Zum Einsatz als Behandlungsgas im Sinn der Erfindung haben sich Propan, Lachgas oder Kohlendioxid besonders bewährt. Diese Behandlungsgase zeichnen sich durch gute Lösungsmitteleigenschaften für die üblichen Bindemittel und Plastifizierungsmittel aus; sie sind preiswert und verhältnismäßig einfach zu handhaben.

Es hat sich als günstig erwiesen, die Hilfsstoffe zu extrahieren, während der Grünkörper auf einem Träger aus einem porösen Material aufliegt. Für den Fall, dass flüssige Hilfsstoffe aus dem Grünkörper austreten, können diese vom porösen Träger-Material adsorbiert oder absorbiert, und dadurch eine Verschmutzung oder Beschädigung des Extraktors oder anderer Grünkörper verhindert werden. Der Träger kann beispielsweise in Form einer Platte aus poröser Keramik oder aus porösem Sintermetall ausgebildet sein.

Die oben angegebene technische Aufgabe wird hinsichtlich des Extraktors gelöst, indem dieser ein druckdichtes, mindestens eine seitliche Begrenzungswand Gehäuse aufweist, das einen Behandlungsraum für die Aufnahme eines mit einer Vielzahl von Grünkörpem beladenen Trägerelements umschließt, der mit mindestens einem Einlass für ein Behandlungsgas und mit mindestens einem Auslass für ein Abgas versehen ist, und der eine verschließbare Belade- und Entnahmeöffnung für die Grünkörper aufweist, die als Durchlass für das Trägerelement in der seitlichen Begrenzungswand ausgebildet ist.

Dadurch, dass die Belade- und Entnahmeöffnung als Durchlass für das Trägerelement ausgebildet ist, kann das gesamte Trägerelement durch diese Öffnung in den Extraktor eingebracht und auch wieder entnommen werden. Die Grünkörper können bereits vor dem Beladen des Extraktors auf dem Trägerelement angeordnet sein. Nach Abschluss der Extraktion werden die Grünkörper mitsamt dem Trägerelement aus dem Extraktor entnommen und können auf dem Trägerelement aufliegend einer Weiterverarbeitungsvorrichtung - wie etwa einem Sinterofen zugeführt werden.

Da die Entnahmeöffnung in der seitlichen Begrenzungswand ausgebildet ist, kann das Trägerelement durch im wesentlichen horizontale Verschiebung, also ohne Überwindung größerer Höhenunterschiede, in den Extraktor eingebracht werden.

In einer bevorzugten Ausführungsform des Extraktors ist das Gehäuse als stimseitig geschlossener Hohlzylinder ausgebildet ist, wobei die Belade- und Entnahmeöffnung im Bereich der einen Stirnseite vorgesehen ist. Die beiden Stirnseiten bilden dabei seitliche Begrenzungswände im Sinne der Erfindung, wovon mindestens im Bereich der einen Stirnseite die Belade- und Entnahmeöffnung vorgesehen ist. Ein Zylinder mit kreisförmigem Querschnitt ist als Druckbehälter besonders gut geeignet. Dabei trägt der Zylindermantel zur seitlichen Begrenzung des Behandlungsraums bei und er bildet gleichzeitig die obere und untere Begrenzungswand.

Eine weitere Verbesserung ergibt sich, wenn der Behandlungsraum mindestens zwei Einlässe und mindestens zwei Auslässe aufweist. Ein derart modifizierter Extraktor ist insbesondere für einen Einsatz bei der weiter oben beschriebenen Variante des erfindungsgemäßen Verfahrens geeignet, bei dem die Strömungsrichtung während der Extraktion umgekehrt wird.

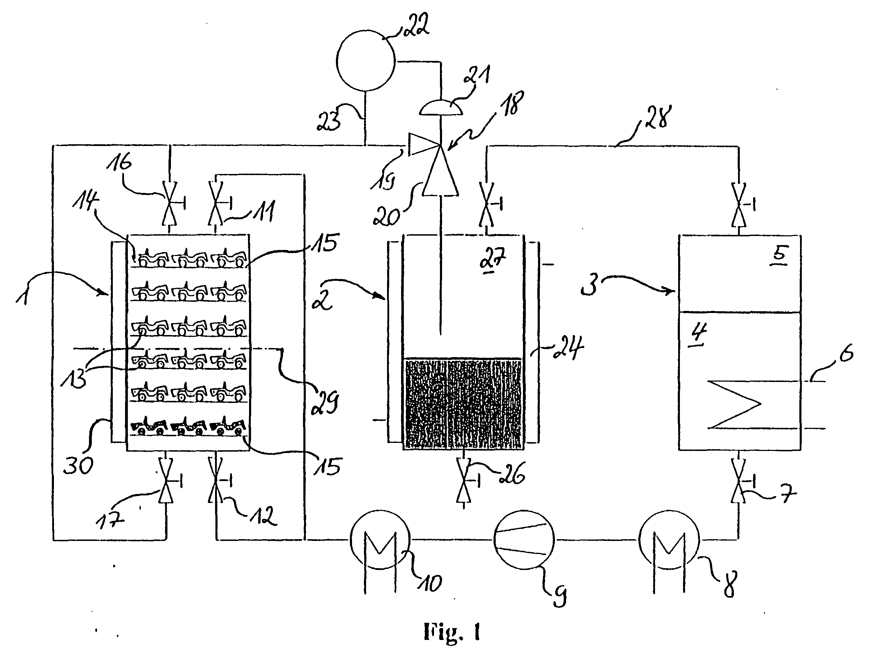

Im folgenden wird die Erfindung anhand eines Ausführungsbeispiels und einer Zeichnung näher erläutert. Als einzige Figur zeigt
- **Figur 1**: eine Vorrichtung zur Durchführung des erfindungsgemäßen Verfahrens in schematischer Darstellung.

Die in **Figur 1** dargestellte Vorrichtung dient zur Extraktion (im folgenden auch als Entbinderung bezeichnet) von Grünkörpem unter Einsatz von überkritischem Kohlendioxid. Das Kohlendioxid wird dabei im Kreislauf geführt. Die Vorrichtung umfasst einen Extraktor 1, einen Separator 2, und einen CO₂-Tank 3 für die Aufnahme von Kohlendioxid.

Im CO₂-Tank 3 liegt das Kohlendioxid in einer Flüssigphase 4 und in einer Gasphase 5 vor. Zur Verflüssigung des Kohlendioxids ist innerhalb des CO₂-Tanks 3 ein Kondensator 6 vorgesehen. Vom CO₂-Tank 3 führt eine Gasleitung über einen Auslass 7, einen Unterkühler 8, eine CO₂-Pumpe 9 und einen Wärmetauscher 10 wahlweise zu einem oberen Einlass 11 und zu einem unteren Einlass 12 des Extraktors 1.

Der Extraktor 1 weist die Form eines Hohlzylinders auf, wobei in der Darstellung von Figur 1 die Zylinderachse 29 in der Horizontalen verläuft. Im Bereich einer der Stirnseiten ist die Befüll- und Entnahmeöffnung vorgesehen, die mittels einer Klappe 30 druckdicht verschließbar ist. Innerhalb des Extraktors 1 ist ein fahrbares Gestell 15 mit mehreren Zwischenböden vorgesehen, auf denen eine Vielzahl von Grünkörpem 13 zum Entbindem angeordnet sind. Die Grünkörper 13 liegen dabei auf Platten 14 aus porösem Sintermetall auf. Durch die Befüll- und Entnahmeöffnung kann das Gestell 15 in den Extraktor eingebracht und aus diesem entnommen werden.
Innerhalb des Extraktors 1 ist weiterhin eine (in der Figur nicht dargestellte Heizeinrichtung) vorgesehen. In einer alternativen Ausführungsform wird der Extraktor 1 von der Heizeinrichtung umgeben. Der Extraktor ist wahlweise über einen oberen Auslass 16 oder einen unteren Auslass 17 und einem Eckventil 18 mit dem Separator 2 verbindbar.

Die Hochdruckseite 19 des Eckventils ist in Figur 1 mit einem kleineren Schenkel gekennzeichnet und die Niedrigdruckseite 20 mit einem größeren Schenkel. Das Eckventil 18 wird mittels einer Pneumatik 21 und eine Druckregeleinrichtung 22 gesteuert. Die Druckregeleinrichtung 22 ist über eine Druckleitung 23 mit der Hochdruckseite 19 des Eckventils verbunden.

Der Separator 2, in dem Bindemittel und Plastifizierer von gasförmigem Kohlendioxid getrennt werden, ist von einer Temperiereinrichtung umgeben. Die aus dem Kohlendioxid auskondensierenden Bestandteile bilden einen Extrakt 25, der sich im wesentlichen aus Wachsen, Paraffinen und Harzen zusammensetzt und der über einen Stutzen 26 abgelassen werden kann. Der Gasraum 27 oberhalb des Extrakts 25 ist über eine Gasleitung 28 mit der Gasphase 5 des CO₂-Tanks 3 verbunden.

Nachfolgend wird das erfindungsgemäße Verfahren zur schonenden Extraktion von Hilfsstoffen aus Grünkörpern unter Einsatz von überkritischem Kohlendioxid anhand Figur 1 näher erläutert:

Der Extraktor 1 wird mit einer Charge von Grünkörpern 14 beladen, indem die zu behandelnden Grünkörper 14 auf dem Gestell 15 außerhalb des Extraktors 1 angeordnet werden und das Gestell anschließend horizontal in den Extraktor 1 eingeschoben wird.

Bei den Grünkörpem handelt es sich um Gießteile, die aus einem Gemisch von Carbonyl-Eisenpulver und Hilfsstoffen, wie Bindemittel und Plastifizierungsmittel durch Pulverspritzgießen hergestellt worden sind. Die Hilfsstoffe werden im folgenden unter dem Ausdruck "Bindemittel" zusammengefasst. Bezogen auf das Gesamtgewicht beträgt der Anteil an den Bindemitteln 6 bis 9 Gew.-%. Die verschiedenen Bindemittel- Fraktionen sind in unterschiedlichen Mengenverhältnissen enthalten. Die Bindemittel-Fraktionen unterscheiden sich hinsichtlich ihrer Schmelztemperatur und ihrer Löslichkeit in überkritischem Kohlendioxid.

Im CO₂-Tank 3 wird Kohlendioxid bei einer Temperatur von etwa 20 °C und einem Druck im Bereich von 55 bar bis 60 bar gehalten. Dabei bildet sich ein Phasengleichgewicht unter Bildung der Gasphase 5 und der Flüssigphase 4. Aus der Flüssigphase 4 wird kontinuierlich flüssiges Kohlendioxid entnommen und über den Unterkühler 8 und die CO₂-Pumpe 9 unter einem Druck von 200 bar bis 500 bar als überkritisches Kohlendioxid dem Wärmetauscher 10 zugeführt. In der Regel wird im Extraktor 1 ein Druck von 350 bar eingestellt.

Die erfindungsgemäße Entbinderung umfasst eine Aufheizphase, während der die Temperatur des durch den Extraktor 1 geleiteten kontinuierlichen Stroms aus überkritischem Kohlendioxid langsam erhöht wird. Die Temperierung des KohlendioxidStroms erfolgt im Wärmetauscher 10. Im Ausführungsbeispiel wird eine schrittweise Temperaturerhöhung gemäß folgender Tabelle eingestellt:

**Tabelle 1:**

| Temperaturverlauf beim Extrahieren mit überkritischem CO₂ | | |
|---|---|---|
| Nr. | Dauer [min] | Temperatur [°C] |
| 1 | 25 | 30 |
| 2 | 15 | 50 |
| 3 | 15 | 70 |
| 4 | 15 | 90 |
| 5 | 20 | 120 |

Alternativ zu einer schrittweisen Temperaturerhöhung kann die Temperatur auch kontinuierlich erhöht werden. In einem dementsprechend modifizierten Ausführungsbeispiel wird das überkritische Kohlendioxid durch den Wärmetauscher 10 temperiert, wobei eine kontinuierliche Temperaturerhöhung von 30 °C auf 120 °C bei einer Aufheizrate von 1°C/min eingestellt wird.

Vom Wärmetauscher 10 gelangt der kontinuierliche Strom aus überkritischem Kohlendioxid in den Extraktor 1, umströmt die porösen Grünkörper 14 und löst dabei Bestandteile der darin enthaltenen Bindemittel. Die Menge des einzusetzenden Kohlendioxids hängt von der Masse des zu entbindemden Materials ab. Im Ausführungsbeispiel werden 10 kg überkritisches Kohlendioxid pro Kilogramm des Ausgangsgewichts der Grünkörper eingesetzt.

Die allmähliche Temperaturerhöhung bewirkt eine sukzessive Lösung der unterschiedlichen Bindemittel-Fraktionen, so dass eine ausreichende Formstabilität der Grünkörper 14 während der Entbinderung gewährleistet ist. Weiterhin wird eine Verflüssigung von Bindemittel vermieden, indem niedrigschmelzenden Fraktionen bereits aufgelöst sind, bevor deren Schmelztemperatur erreicht ist. Dennoch austretende Flüssigkeit wird durch die porösen Platten 13 aufgesogen.

Bedingt durch die Temperaturerhöhung verändert sich im Verlauf der Aufheizphase das Dichteverhältnis von überkritischem Kohlendioxid und der zu extrahierenden Bindemittel. Zu Beginn der Aufheizphase wird daher der Strom aus überkritischem Kohlendioxid vom unteren Einlass 12 zum oberen Auslass 16 geführt. Durch die so vorgegebene Strömungsrichtung werden Bindemittelbestandteile mit einer gegenüber dem überkritischen Kohlendioxid geringeren Dichte nach oben verdrängt und aus dem Extraktor ausgetragen. Nach einer Umkehrung des oben genannten Dichteverhältnisses, die in Abhängigkeit vom gewählten Bindemittelsystem bei einem Innendruck von 350 bar bei einer Temperatur im bereich von 70 °C bis 90 °C eintritt, wird die Strömungsrichtung geändert, indem der Kohlendioxid-Strom nun vom oberen Einlass 11 zum unteren Auslass 17 geführt wird, so die Bindemittelbestandteile mit nunmehr höherer Dichte leichter über den untem Auslass 17 entfernt werden können.

Anschließend an die Aufheizphase werden die Grünkörper 14 während einer Haltezeit von 20 min auf einer Temperatur von 120 °C gehalten, wobei sie weiterhin von dem überkritischen Kohlendioxid umströmt werden. Die Extraktion wird beendet, wenn nur noch ein Restanteil an Bindemitteln in den Grünkörpem 14 vorhanden ist, der für die Stabilität der Grünkörper 14 bis zum Sintern erforderlich ist. Dieser Restanteil liegt bei ca. 20 Gew-%. Im Ausführungsbeispiel ist die Extraktion somit nach 90 min abgeschlossen.

Die aus dem Extraktor 1 ausgetragenen Bindemittelbestandteile gelangen in den Separator 2 und kondensieren oder kristallisieren dort infolge der Abkühlung durch die Entspannung des Kohlendioxids aus. Das gereinigte Kohlendioxid wird dem CO₂-Tank 3 wieder zugeführt.

Durch Verwendung von überkritischem Kohlendioxid als Extraktionsmittel und seiner guten und über die Temperierung im Wärmetauscher 10 genau steuerbaren Lösungs- und Transporteigenschaften wird eine Verkürzung der Entbinderungszeiten auf wenige Stunden erreicht. Das erfindungsgemäße Verfahren ermöglicht die Wiederverwendung des Extrakts 25 und entlastet damit die Umwelt. Auch das Lösungsmittel Kohlendioxid wird im Kreislauf geführt.

Nach der Entbinderung wird die Klappe 30 geöffnet, das Gestell 15 aus dem Extraktor 1 herausgefahren und die darauf angeordneten Grünkörper 14 zur Fertigstellung der gewünschten Bauteile einem (in Figur 1 nicht dargestellten) Sinterofen zugeführt. Der Sinterofen ist ebenfalls für die Aufnahme des Gestells 15 ausgelegt, so dass ein Umlagern der behandelten Grünkörper 14 nicht erforderlich ist. Diese werden anschließend bei einer Temperatur von 1000 °C bis 1350 °C gesintert.

## Patentansprüche

1. Verfahren zur Herstellung eines Bauteils aus pulverförmigem Ausgangsmaterial, durch Vermischen des Pulvers mit Hilfsstoffen, umfassend Bindemittel, unter Bildung einer fließfähigen Masse, Erzeugen eines Grünkörpers aus der Masse durch Pulverspritzgießen, Extraktion eines Teils der Hilfsstoffe, indem der Grünkörper in einem Behälter erwärmt und einem Lösungsmittel-Strom ausgesetzt wird, und Sintern des Grünkörpers unter Bildung des Bauteils, wobei die Extraktion eine Aufheizphase umfasst, während der die Temperatur des Grünkörpers (14) stetig oder schrittweise erhöht und der Grünkörper (14) von einem Lösungsmittel in Form eines verdichteten, überkritischen Behandlungsgases umströmt wird, wobei dem Behandlungsgas eine Strömungsrichtung vorgegeben, der Grünkörper (14) während der Aufheizphase von dem Behandlungsgas in Strömungsrichtung umströmt und die Strömungsrichtung im Verlauf der Aufheizphase mindestens einmal geändert wird.

2. Verfahren nach Anspruch 1, **dadurch gekennzeichnet, dass** in der Aufheizphase eine Aufheizrate im Bereich von 0,1°C/min und 5 °C/min, vorzugsweise im Bereich von 0,5°C/min und 2 °C/min, eingestellt wird.

3. Verfahren nach Anspruch 1 oder 2, **dadurch gekennzeichnet, dass** in der Aufheizphase die Temperatur des Grünkörpers im Bereich zwischen 20 °C und 150 °C, vorzugsweise zwischen 30 °C und 130 °C erhöht wird.

4. Verfahren nach einem der Ansprüche 1 bis 3, **dadurch gekennzeichnet, dass** der Grünkörper in einem ersten zeitlichen Abschnitt der Aufheizphase von unten nach oben, und in einem zweiten zeitlichen Abschnitt der Aufheizphase von oben nach unten vom Behandlungsgas umströmt wird.

5. Verfahren nach einem der Ansprüche 1 bis 4, **dadurch gekennzeichnet, dass** die Behandlung des Grünkörpers (14) im Bereich von einer Stunde bis drei Stunden andauert.

6. Verfahren nach einem der Ansprüche 1 bis 5, **dadurch gekennzeichnet, dass** als Behandlungsgas Propan, Lachgas oder Kohlendioxid eingesetzt wird.

7. Verfahren nach einem der Ansprüche 1 bis 6, **dadurch gekennzeichnet, dass** der Grünkörper (14) bei der Extraktion der Hilfsstoffe auf einem Träger aus einem porösen Material aufliegt.

## Claims

1. Method for producing a component from pulverulent starting material by mixing the powder with auxiliaries, comprising binders, resulting in the formation of a free-flowing mass, producing a green compact from the mass by means of powder injection moulding, extraction of some of the auxiliaries by heating the green compact in a tank and exposing it to a stream of solvent, and sintering the green compact, resulting in the formation of the component, the extraction comprising a heating-up phase during which the temperature of the green compact (14) is continuously or incrementally increased and a solvent in the form of a compressed, supercritical treatment gas flows around the green compact (14), a direction of flow being imparted to the treatment gas, the treatment gas flowing in the direction of flow around the the green compact (14) during the heating-up phase and the direction of flow being changed at least once in the course of the heating-up phase.

2. Method according to Claim 1, **characterized in that** a heating-up rate from 0.1°C/min to 5°C/min, preferably in the range from 0.5°C/min to 2°C/min, is set in the heating-up phase.

3. Method according to Claim 1 or 2, **characterized in that** in the heating-up phase the temperature of the green compact is increased in the range between 20°C and 150°C, preferably between 30°C and 130°C.

4. Method according to one of Claims 1 to 3, **characterized in that** the treatment gas flows around the green compact from the bottom to the top in a first time period of the heating-up phase, and the treatment gas flows around it from the top to the bottom in a second time period of the heating-up phase.

5. Method according to one of Claims 1 to 4, **characterized in that** the treatment of the green compact (14) lasts in the range from one hour to three hours.

6. Method according to one of Claims 1 to 5, **characterized in that** propane, nitrous oxide or carbon dioxide are used as the treatment gas.

7. Method according to one of Claims 1 to 6, **characterized in that** the green compact (14) rests on a carrier made of a porous material during the extraction of the auxiliaries.

## Revendications

1. Procédé de fabrication d'un composant à partir d'un matériau de départ poudreux, par mélange de la poudre avec des substances auxiliaires qui comprennent un liant pour former une pâte apte à s'écouler, formation d'un corps cru à partir de la pâte par moulage de poudre par injection, extraction d'une partie des substances auxiliaires en chauffant le corps cru dans un récipient et en l'exposant à un écoulement de solvant, et frittage du corps cru pour former le composant, l'extraction comprenant une phase de chauffage pendant laquelle la température du corps cru (14) est relevée de façon continue ou par étapes et le corps cru (14) est balayé par un solvant qui présente la forme d'un gaz de traitement comprimé en conditions hypercritiques, le gaz de traitement s'écoulant dans une direction d'écoulement prédéterminée, le corps cru (14) étant balayé par le gaz de traitement dans la direction d'écoulement pendant la phase de chauffage et la direction d'écoulement étant modifiée au moins une fois au cours de la phase de chauffage.

2. Procédé selon la revendication 1, **caractérisé en ce que** pendant la phase de chauffage, on règle une vitesse de chauffage comprise dans la plage de 0,1°C/min et 5°C/min et de préférence dans la plage de 0,5°C/min et 2°C/min.

3. Procédé selon les revendications 1 ou 2, **caractérisé en ce que** pendant la phase de chauffage, la température du corps cru est augmentée entre 20°C et 150°C et de préférence entre 30°C et 130°C.

4. Procédé selon l'une des revendications 1 à 3, **caractérisé en ce que** dans une première partie de la phase de chauffage, le corps cru est balayé du bas vers le haut par le gaz de traitement et dans une deuxième partie de la phase de chauffage du haut vers le bas.

5. Procédé selon l'une des revendications 1 à 5, **caractérisé en ce que** le traitement du corps cru (14) dure d'une heure à trois heures.

6. Procédé selon l'une des revendications 1 à 5, **caractérisé en ce que** comme gaz de traitement, on utilise du propane, du protoxyde d'azote ou du dioxyde de carbone.

7. Procédé selon l'une des revendications 1 à 6, **caractérisé en ce que** lors de l'extraction des substances auxiliaires, le corps cru (14) repose sur un support en matériau poreux.
